# EUROPÄISCHE PATENTSCHRIFT

(11) **EP 2 699 582 B1**
(45) Veröffentlichungstag und Bekanntmachung des Hinweises auf die Patenterteilung: **16.09.2015**
(21) Anmeldenummer: 12723361.7
(22) Anmeldetag: 16.04.2012
(51) Int. Cl.: C07F 9/6571, C08K 5/5398

(54) **AMMONIUMSALZE VON DOPO-OH**
AMMONIUM SALTS OF DOPO-OH
SELS D'AMMONIUM DE DOPO-OH

(30) Priorität: 18.04.2011 AT 5482011
(43) Veröffentlichungstag der Anmeldung: 26.02.2014
(73) Patentinhaber: Metadynea Austria GmbH, 3500 Krems (AT)
(72) Erfinder: ZICH, Thomas, A-4020 Linz (AT); FREIDL, Fritz Johann, A-3500 Krems (AT); MEHOFER, Bernadette, A-3500 Krems (AT); HÖNEL, Michael, A-8010 Graz (AT); ARTNER, Johannes, A-1110 Wien (AT); DÖRING, Manfred, 76744 Wörth am Rhein (DE); CIESIELSKI, Michael, 06217 Merseburg (DE)
(74) Vertreter: Verbart, Jeannette J.M.
(86) Internationale Anmeldenummer: PCT/AT2012/050051
(87) Internationale Veröffentlichungsnummer: WO 2012/142643

(56) Entgegenhaltungen:
- WO-A1-2011/000018
- WO-A1-2011/035357

## Beschreibung

Die vorliegende Erfindung betrifft ein Verfahren zur Herstellung eines Ammoniumsalzes von 9,10-Dihydro-10-hydroxy-9-oxa-10-phosphaphenanthren-10-on bzw. -10-oxid (DOPO-OH), und neue Salze von DOPO-OH sowie deren Verwendung als Flammschutzmittel.

Aus der Literatur ist bekannt, dass 9,10-Dihydro-9-oxa-10-phosphaphenanthren-10-on oder -oxid (DOPO), das erstmals von Sanko Chemical Co. Ltd. in DE 20 34 887 beschrieben wurde, und verschiedene Derivate davon gute Flammschutzeigenschaften aufweisen, wobei diese Wirkung darauf zu beruhen scheint, dass diese Verbindungen beim Erhitzen phosphorhaltige Radikale freisetzen (siehe z.B. Schäfer et al., J. Appl. Polym. Sci. 105(2), 685-696 (2007)).

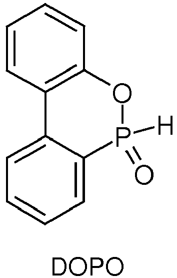

Auch das Oxidationsprodukt DOPO-OH ist bekannt. Seine Herstellung wird unter anderem von J. Cardogan (J. Cadogan, J. Chem. Soc. Chem. Commun. 23, 1685 (1986)) und von A. Schäfer (A. Schäfer, Diss., Ruprecht-Karls-Universität, Heidelberg, 2008) beschrieben.

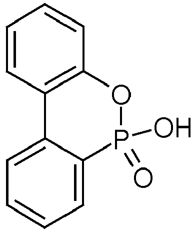

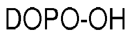

Die Erfinder des vorliegenden Anmeldungsgegenstands haben in den österreichischen Patentanmeldungen AT 508.468 A1 und AT A 570/2010 und in der darauf basierenden WO 2011/000019 einige schwefelhaltige Derivate offenbart, die ebenfalls gut Flammschutzeigenschaften aufweisen. Konkret wurden Derivate von 9,10-Dihydro-9-oxa-10-phosphaphenanthren-10-thion bzw. -10-sulfid (DOPS) hergestellt.

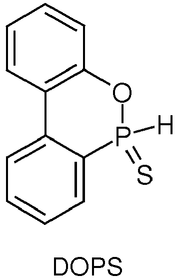

Darunter waren auch DOPS-OH, DOPS-SH sowie verschiedene Ammoniumsalze der beiden.

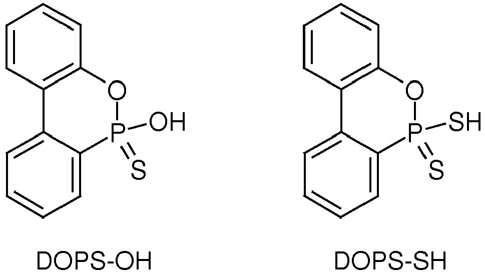

Die Erfinder haben zudem herausgefunden, dass derartige Schwefelderivate synergistische Wirkung mit elementarem Schwefel und anderen schwefelhältigen Verbindungen aufweisen. Dieser Synergismus hat sich darüber hinaus als äußerst substanzspezifisch erwiesen, d.h. nicht jede schwefelhaltige, als flammschutzfördernd bekannte Verbindung wirkt in gleichem Ausmaß synergistisch, wenn überhaupt.

Literaturbekannt ist ebenfalls, dass auch ringgeöffnete Hydrolysate solcher Substanzen, also Verbindungen, die die Struktur 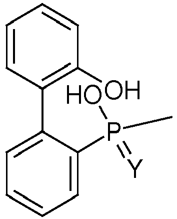 enthalten, worin Y Sauerstoff oder Schwefel darstellt, flammhemmende Wirkung haben können.

Vor diesem Hintergrund war es nichtsdestotrotz wünschenswert, weitere, neue Substanzen mit guter Flammschutzwirkung zur Verfügung zu haben, insbesondere solche, die die Gasphasenaktivität verbessern und mit denen natürliche oder synthetische Polymere flammhemmend ausgerüstet werden können.

Ein Ziel der vorliegenden Erfindung war daher die Bereitstellung neuer Verbindungen mit verbesserten Flammschutzeigenschaften. Insbesondere war es interessant herauszufinden, ob andere Derivate von DOPO und DOPO-OH ebenfalls synergistische Wirkung mit Schwefel oder Schwefelverbindungen aufweisen, zumal die Erfinder selbst festgestellt hatten, dass diesbezüglich keine Voraussagen getroffen werden können, sondern diese Eigenschaft für jede neue Verbindung eigens überprüft werden muss.

In der WO 2011/035357 A1 beschreibt die Sunpor Kunststoff Ges.m.b.H., insbesondere auf Seite 17, Derivate von DOPO als Flammschutzmittel, unter die auch Alkali- und Erdakalimetall-, Ammonium- und Phosphoniumsalze von DOPO-OH und DOPO-SH fallen. Es wird jedoch kein einziges derartiges Salz hergestellt, noch wird eine Anleitung zu deren Herstellung angegeben. Das einzige getestete Flammschutzmittel ist DOPO selbst.

### OFFENBARUNG DER ERFINDUNG

Das obige Ziel wird durch Bereitstellung von drei Ammoniumsalzen von DOPO-OH erreicht, d.h. durch ein Verfahren zur Herstellung von Ammoniumsalzen von 9,10-Dihydro-10-hydroxy-9-oxa-10-phosphaphenanthren-10-on bzw. -10-oxid (DOPO-OH) der Formel I: 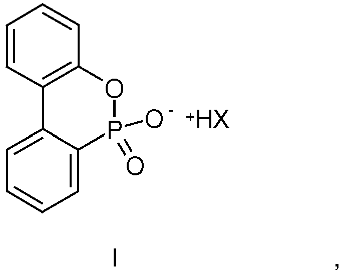 worin X aus Ammoniak, Melamin und Guanidin ausgewählt ist, durch Umsetzen von 9,10-Dihydro-10-hydroxy-9-oxa-10-phosphaphenanthren-10-on bzw. -10-oxid (DOPO-OH) mit dem entsprechenden Amin oder einem Salz davon,
dadurch gekennzeichnet, dass die Umsetzung in einem heterogenen Reaktionsgemisch erfolgt, indem DOPO-OH und/oder das entsprechende Amin als Feststoff(e) vorgelegt bzw. zugesetzt wird/werden.

Insbesondere sind damit die folgenden drei Verbindungen gemeint: 9,10-Dihydro-10-hydroxy-9-oxa-10-phosphaphenanthren-10-on- bzw. -10-oxid-ammoniumsalz (DOPO-ONH₄): 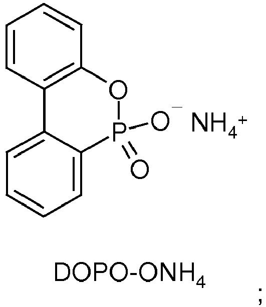 9,10-Dihydro-10-hydroxy-9-oxa-10-phosphaphenanthren-10-on- bzw. -10-oxid-melaminiumsalz (DOPO-OMel): 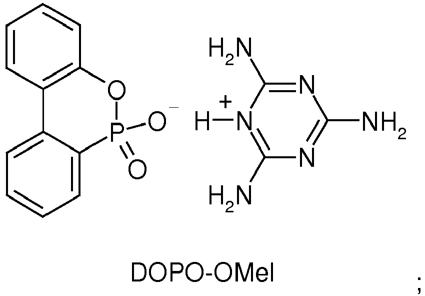 und 9,10-Dihydro-10-hydroxy-9-oxa-10-phosphaphenanthren-10-on- bzw. -10-oxid-guanidiniumsalz (DOPO-OGua):

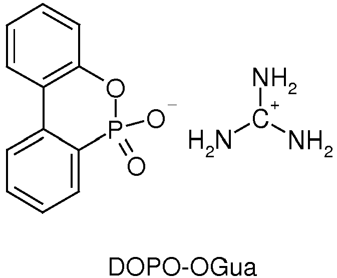

Das obige Ziel wird weiter erreicht durch die Bereitstellung von neue Ammoniumsalzen der Formel I worin X aus Melamin und Guanidin ausgewählt ist, d.h. 9,19 -Dihydro-10-hydroxy-9-oxa-10-phosphaphenanthren-10-on bzw. -10-oxid-melaminiumsalz (DOPO-OMel) bzw. 9,10-Dihydro-10-hydroxy-9-oxa-10-phosphaphenantren-10-on- bzw. -10-oxid-guanidiniumsalz (DOPO-OGua).

Alle Verbindungen gemäß der Erfindung haben sich als wirksame Flammschutzmittel erwiesen, die insbesondere geruchsneutral in flammhemmend auszurüstende Polymermassen einarbeitbar sind, was beispielsweise bei den von den Erfindern in früheren Arbeiten hergestellten Substanzen nicht immer der Fall war. Weiters wurde für alle vier Verbindungen ein Synergismus mit Schwefel oder schwefelhältigen Substanzen festgestellt.

In einem zweiten Aspekt betrifft die Erfindung daher die Verwendung der neuen Verbindungen als Flammschutzmittel, alleine oder in Kombination mehrerer davon, vorzugsweise in einem Anteil von 0,1 bis 30 Gew.-%, vorzugsweise 3 bis 10 Gew.-%, bezogen auf das Gesamtgewicht aus flammhemmend auszurüstendem Substrat und Flammschutzmittel(n).

Ein Ammoniumsalz gemäß der Erfindung oder ein Gemisch mehrerer davon wird vorzugsweise in Kombination mit elementarem Schwefel und/oder zumindest einer schwefelhältigen Verbindung als synergistisches Flammschutzmittel eingesetzt, wobei die zumindest eine schwefelhältige Verbindung vorzugsweise zumindest eine S-S-Bindung aufweist und noch bevorzugter aus Ammoniumthiosulfat, Melaminthiosulfat und Alkylphenolpolysulfiden, wie z.B. polymerem p-t-Butylphenoldisulfid, ausgewählt ist, da diese besonders gute synergistische Wirkung mit den erfindungsgemäßen DOPO-Derivaten gezeigt haben.

Die erfindungsgemäßen Substanzen können dabei in einem dritten Aspekt der Erfindung als Flammschutzmittel in einer Flammschutzzusammensetzung eingesetzt werden, die zusätzlich zu einer oder mehreren der neuen Verbindungen einen oder mehrere Synergisten und/oder weitere, auf dem Gebiet übliche Additive, Hilfsstoffe oder Co-Komponenten enthalten kann. Insbesondere ist/sind in der Flammschutzzusammensetzung zusätzlich elementarer Schwefel und/oder zumindest eine schwefelhältige Verbindung enthalten, die vorzugsweise aus Ammoniumthiosulfat, Melaminthiosulfat und Alkylphenolpolysulfiden, wie z.B. polymerem p-t-Butylphenoldisulfid (z.B. Vultac^{®} TB7), und 2,2'-Dibenzothiazolyldisulfid (MTBS) ausgewählt ist/sind.

Zu den optionalen Additiven zählen beispielsweise Hitzestabilisatoren, Lichtstabilisatoren, UV-Licht Absorber, Antioxidantien, Antistatika, Konservierungsstoffe, Säurefänger, Fungizide, Füllstoffe, Pigmente, Farbstoffe, Weichmacher, Schmiermittel, Netzmittel, Antidrippingmittel, Nanopartikel, Verstärkungsstoffe wie Glas-, Kohle-, Metall- oder Naturfasern, und andere Flammschutzmitteladditive, Rauchunterdrücker und Mischungen davon, wie sie üblicherweise eingesetzt werden. Vorzugsweise sind sie ausgewählt aus rotem Phosphor, organischen Peroxiden, Metallen und Metallverbindungen, Stickstoffverbindungen, Nanopartikeln und Gemischen davon.

Zu den stickstoffhältigen Verbindungen zählen beispielsweise Ammoniumpolyphosphat, Ammoniumhydrogenphosphat, Ammoniumdihydrogenphosphat; Biuret, Allantoin, Glycoluril, Dicyandiamid, Guanidin und Derivate davon; Melamin und Derivate davon, z.B. Kondensationsprodukte des Melamins, zu Homologen (z.B. Melam, Melem, Melon) und/oder mit mehrbasigen Säuren wie etwa Phosphorsäure, wie z.B. Melaminphosphat oder Melaminpolyphosphat, sowie deren zwei- und dreiwertige anorganische Salze sowie Mischsalze, Melaminpyrophosphat, Melamincyanurat; Ester, Amide und Polykondensationsprodukte von Cyanursäure, Isocyanursäure und Guanamin oder Derivaten davon.

Weitere mögliche Zusätze sind unter anderem Aryl- und Alkylphosphatester, Metallphosphinate oder Metallhypophosphite, Metallphosphate, Metallaminophosphonate sowie deren Kondensationsprodukte, Vertreter der Exolit^{®}-Reihe, d.h. Phosphinsäure- und Disphosphinsäure-Metallsalze, Metall borate, Metalloxide, Metallhydroxide wie etwa Aluminium- oder Magnesiumhydroxid, Aluminiumtrihydrat, Böhmit; Kohlenstoffbildner wie Pentaerythrit, Dipentaerythrit und Tripentaerythrit sowie Derivate davon. Darunter werden Melamincyanurat, Melaminpolyphosphat, Melaminpolyaluminium- und -zinkphosphate, wie sie z.B. unter der Marke Safire^{®} von Catena Additives erhältlich sind, Aluminiumtrihydrat und Böhmit derzeit bevorzugt.

In einem vierten Aspekt stellt die Erfindung Verfahren zur Herstellung der neuen Verbindungen bereit, indem 9,10-Dihydro-10-hydroxy-9-oxa-10-phosphaphenanthren-10-on bzw. -10-oxid (DOPO-OH) mit dem entsprechenden Amin oder einem Salz davon umgesetzt wird.

Vorzugsweise wird dabei DOPO-OH mit Ammoniak zu 9,10-Dihydro-10-hydroxy-9-oxa-10-phosphaphenanthren-10-on- bzw. -10-oxid-ammoniumsalz (DOPO-ONH₄) umgesetzt, mit Melamin zu 9,10-Dihydro-10-hydroxy-9-oxa-10-phosphaphenanthren-10-on- bzw. -10-oxid-melaminiumsalz (DOPO-OMel) umgesetzt bzw. mit Guanidiniumcarbonat zu 9,10-Dihydro-10-hydroxy-9-oxa-10-phosphaphenanthren-10-on-bzw. -10-oxid-guanidiniumsalz (DOPO-OGua) umgesetzt.

Die erfindungsgemäßen neuen Verbindungen können natürlich auch auf anderen Wegen erhalten werden, wobei ein Fachmann - unter Berücksichtigung der speziellen Phosphorinchemie - eine Reihe von alternativen Synthesewegen ermitteln können sollte, und zwar sowohl solche, die bereits von einem DOPO-Derivat ausgehen, als auch solche, bei denen der Dihydrooxaphosphaphenanthren-Grundkörper erst noch auszubilden ist, z.B. ähnlich jener in DE 20 34 887 offenbarten Synthese ausgehend von o-Phenylphenol.

In den nachstehenden Beispielen wird die Herstellung der Substanzen sowie des bevorzugten Vorläufers DOPO-OH ausführlich beschrieben, und die so erhaltenen Verbindungen wurden auf ihre Flammschutzwirkung getestet. Die Schmelzpunkte bzw. Zersetzungspunkte wurden auf einem Kofler-Heiztischmikroskop gemessen und sind unkorrigiert. Sämtliche Werte sind Mittelwerte von Mehrfachbestimmungen.

### BEISPIELE

### Bezugsbeispiele 1 bis 3: Herstellung von 9,10-Dihydro-10-hydroxy-9-oxa-10-phosphaphenanthren-10-on bzw. -10-oxid (DOPO-OH)

### Bezuasbeispiel 1 - Herstellung von DOPO-OH in wässrigem Milieu

In einem Mehrhalskolben, ausgestattet mit einem Rührwerk, Rückflusskühler und Thermometer, wurden 302,6 g pulverförmiges 9,10-Dihydro-9-oxa-10-phosphaphenanthren-10-oxid (DOPO) in 327,6 g Wasser suspendiert, auf 90 °C erhitzt und innerhalb von 6 h bei einer Temperatur von 90-99 °C mit 190,5 g 30%igem Wasserstoffperoxid versetzt. Anschließend wurde die Suspension auf Raumtemperatur abgekühlt, der Niederschlag abfiltriert und mit Wasser nachgewaschen. Die Trocknung des Filterrückstandes erfolgte bei 150°C. Die Rohausbeute betrug 312,2 g [96,1 % d. Th.]. Nach Umkristallisation aus Essigsäure wurden folgende Daten ermittelt:
Fp.: 203 °C (Lit.: 203-204 °C; J. Cadogan, s.o.)
Elementaranalyse C₁₂H₉O₃P (M: 232,17 g/mol):
   ber. C: 62,08 %; H: 3,91 %; P: 13,34 %
   gef. C: 61,5 %; H: 4,2 %; P: 13,2 %

### Bezugsbeispiel 2 - Herstellung von DOPO-OH in alkoholisch-wässrigem Milieu

In einem Mehrhalskolben, ausgestattet mit einem Rührwerk, Rückflusskühler und Thermometer, wurden 302,6 g DOPO in 200,0 g Methanol bei 25 °C vorgelöst und innerhalb von 6 h bei kontinuierlich auf 80 °C ansteigender Temperatur mit 317,5 g 30%igem Wasserstoffperoxid versetzt. Die entstandene Suspension wurde auf Raumtemperatur abgekühlt, der Niederschlag abfiltriert und mit Methanol nachgewaschen. Die Trocknung des Filterrückstandes erfolgte bei 150°C. Die Rohausbeute betrug 277,1 g [85,3 % d. Th.]. Nach Umkristallisation aus Essigsäure wurden folgende Daten ermittelt:
Fp.: 203 °C (Lit.: 203 - 204 °C); Phosphorgehalt: gef. 13,3 %, ber. 13,34 %.

### Bezugsbeispiel 3 - Herstellung von DOPO-OH in aromatisch-wässrigem Milieu

In einem Mehrhalskolben, ausgestattet mit einem Rührwerk, Rückflusskühler und Thermometer, wurden 302,6 g DOPO in 150,0 g Toluol bei 70 °C gelöst und bei kontinuierlich auf 85 °C ansteigender Temperatur innerhalb von 7 h mit 204,1 g 30%-igem Wasserstoffperoxid versetzt. Anschließend wurden 183,7 g Toluol-Wasser-Gemisch abdestilliert. Der Rückstand wurde auf Raumtemperatur abgekühlt und filtriert. Trocknung des Filterrückstands erfolgte bei 150 °C. Die Rohausbeute betrug 314,9 g [96,9 % d. Th.]. Nach Umkristallisation aus Essigsäure wurden folgende Daten ermittelt:
Fp.: 202-203 °C (Lit.: 203 - 204 °C); Phosphorgehalt: gef. 13,2 %, ber. 13,34 %.

### Beispiele 1 bis 4: Herstellung der neuen Verbindungen der Erfindung

### Beispiel 1 - Herstellung von 9,10-Dihydro-10-hvdroxy-9-oxa-10-phosphaphenanthren-10-on- bzw. -10-oxid-ammoniumsalz (DOPO-ONH₄) : Flüssigverfahren

In einem Mehrhalskolben, ausgestattet mit einem Rührwerk, Rückflusskühler und Thermometer, wurden 232,1 g 9,10-Dihydro-10-hydroxy-9-oxa-10-phosphaphenanthren-10-oxid (DOPO-OH) in 216,0 g Wasser suspendiert und bei 25 °C mit 71,5 g 25%igem Ammoniak versetzt. Anschließend wurde die Suspension auf 98 °C erhitzt und danach auf Raumtemperatur abgekühlt. Der gesamte Kolbeninhalt wurde auf eine Trocknungstasse entleert und bei 120 °C getrocknet. Die Ausbeute betrug 248,4 g [99,7 % d. Th.] eines weißen, kristallinen Feststoffs.
Fp.: 234-240 °C (Zers.)
Elementaranalyse C₁₂H₁₂NO₃P (M: 249,20 g/mol):
   ber. C: 57,83 %; H: 4,85 %; N: 5,62 %; P: 12,43 %
   gef. C: 57,5 %; H: 5,1 %; N: 5,5 %; P: 12,4 %

### Beispiel 2 - Herstellung von 9,10-Dihydro-10-hydroxy-9-oxa-10-phosphaphenanthren-10-on- bzw. -10-oxid-ammoniumsalz (DOPO-ONH₄): Feststoffverfahren

232,0 g trockenes und vermahlenes DOPO-OH mit einer Kornfeinheit < 45 µm wurden in einer geschlossenen Mahlkammer vorgelegt und bei laufendem Scherwerk langsam mit 78,3 g Ammoniak, 25%ig in Wasser, versetzt. Am Ende der Ammoniakzugabe hatte sich das Mahlgut auf 77 °C erhitzt, ohne den pulverförmigen Aggregatzustand zu verlieren. Nach einer 5-minütigen Nachmischdauer wurde das Scherwerk abgestellt und das Mahlgut 1 h lang ruhen gelassen. Danach wurde das Mischgut nochmals für 5 min nachgemahlen und anschließend auf eine Trocknungstasse entleert, verteilt und bei 140 °C getrocknet. Die Ausbeute betrug 242 g [97,2 % d. Th.] eines weißen, kristallinen Feststoffs, dessen Daten mit jenen aus Beispiel 1 im Wesentlichen übereinstimmten.

### Beispiel 3 - Herstellung von 9,10-Dihydro-10-hydroxy-9-oxa-10-phosphaphenanthren-10-on- bzw. -10-oxid-melaminiumsalz (DOPO-OMel)

In einem Mehrhalskolben, ausgestattet mit einem Rührwerk, Rückflusskühler und Thermometer, wurden 92,8 g DOPO-OH in 400 g Wasser suspendiert und bei 25 °C mit 50,4 g Melamin versetzt. Anschließend wurde die Suspension auf 90 °C erhitzt und 4 h lang bei dieser Temperatur gehalten. Danach wurde auf Raumtemperatur abgekühlt. Der Niederschlag wurde abfiltriert und mit Wasser nachgewaschen. Die Trocknung erfolgte bei 160 °C, und die Ausbeute betrug 141,4 g [98,7 % d. Th.] eines weißen, kristallinen Feststoffs.
Fp.: 246-250 °C (Zers.)
Elementaranalyse C₁₅H₁₅N₆O₃P (M: 358,29 g/mol):
   ber. C: 50,28 %; H: 4,22 %; N: 23,46 %; P: 8,64 %
   gef. C: 49,8 %; H: 4,5 %; N: 23,3 %; P: 8,5 %

### Beispiel 4 - Herstellung von 9,10-Dihydro-10-hydroxy-9-oxa-10-phosphaphenanthren-10-on- bzw. -10-oxid-guanidiniumsalz (DOPO-OGua)

In einem Mehrhalskolben, ausgestattet mit einem Rührwerk, Rückflusskühler und Thermometer, wurde ein Gemisch aus 100,0 g Wasser, 100 g Ethanol und 36,0 g Guanidiniumcarbonat zubereitet und auf 75 °C erhitzt. Anschließend wurden portionsweise 92,8 g DOPO-OH über einen Zeitraum von 5,5 h zugesetzt. Nachdem keine CO₂-Entwicklung mehr feststellbar war, wurde die Reaktionsmasse destillativ eingedickt. Der verbliebene Rohkristallbrei (135,6 g) wurde auf eine Trocknungstasse aufgebracht und bei 110 °C getrocknet. Die Ausbeute betrug 100,5 g [86,0 % d. Th.] eines weißen, kristallinen Feststoffs.
Fp.: 278-280 °C (Zers.)
Elementaranalyse C₁₃H₁₄N₃O₃P (M: 291,24 g/mol):
   ber. C: 53,61 %; H: 4,84 %; N: 14,42 %; P: 10,63 %
   gef. C: 53,3 %; H: 5,1 %; N: 14,3 %; P: 10,5 %

### Vergleichsbeispiele 1 bis 16 und Beispiele 5 bis 22 - Anwendungsbeispiele für die Flammschutzausrüstung von Kunststoffen

Zur Untersuchung der Nachbrenndauer (in s) bei Beflammung wurden für Polystyrol und Epoxidharze gemäß UL94 Probenkörper mit 70 x 13 x 4 mm hergestellt. Kürzere Brenndauer-Werte stehen folglich für eine bessere Brandschutzwirkung. Für Polyurethanharzproben wurde gemäß DIN 75200 bzw. FMVSS 302 verfahren.

### Vergleichsbeispiele 1 bis 12 und Beispiele 5 bis 15 - Herstellung und Testung flammschutzmittelhältiger Polystyrolproben

Aus Polystyrol-Granulat (M_{w}: ca. 192.000 g/mol, T_{g}: ca. 94 °C) wurden wie folgt Probenkörper geformt. Das Granulat wurde zu einem Pulver vermahlen und in einem Mörser mit den jeweiligen Zusätzen vermischt (in Vergleichsbeispiel 1 ohne jeden Zusatz). Je 12 g dieser Feststoff-Mischungen wurden in Aluminiumtiegel eingewogen, die anschließend in einen vorgeheizten Trockenschrank gestellt und so lange bei der jeweils erforderlichen Temperatur darin belassen wurden, bis das Pulver zu kompakten Platten verschmolzen war. Die dafür erforderliche Temperatur ist von der Zusammensetzung der jeweiligen Mischung abhängig und lag bei den untersuchten Probekörpern zwischen 180 und 190 °C, und der Schmelzvorgang war nach 12 bis 15 min beendet, wie dies in der nachfolgenden Tabelle angegeben ist. Nach dem Abkühlen wurden die Platten aus den Aluminiumtiegeln entnommen und zu Prüfkörpern für die Flammschutztests zersägt.

Als Synergisten wurden elementarer Schwefel, Vultac TB7, ein p-t-Butylphenoldisulfid-Polymer der Fa. Arkema, Melaminthiosulfat (Bis[(2,4,6-triamino-1,3,5-triazinium)-thiosulfat; MelTS; hergestellt von der Krems Chemie Chemical Services AG wie in der parallelen österreichischen Patentanmeldung AT A ..../2011 beschrieben) und Ammoniumthiosulfat ((NH₄)₂S₂0₃; ATS) eingesetzt.

Die für die Probenkörper erhaltenen Ergebnisse sind in umseitiger Tabelle 1 angeführt und stellen Mittelwerte von je vier Messungen dar.

**Tabelle 1 - Polystyrolproben**

| **Beispiel** | **Flammschutzmittel** | **Gew.-%** | **Synergist** | **Gew.-%** | **Polystyrol Gew.-%** | **Verarbeitungsbedingungen** | **Brenndauer, s** |
|---|---|---|---|---|---|---|---|
| Vergl. 1 | - | - | - | - | 100,0 | 190 °C, 15 min | k.S. |
| Vergl. 2 | DOPO | 5,0 | - | - | 95,0 | 180 °C, 12 min | k.S. |
| Vergl. 3 | DOPO | 10,0 | - | - | 90,0 | 180 °C, 12 min | 24 |
| Vergl. 4 | DOPO | 5,0 | ATS | 5,0 | 90,0 | 190 °C, 15 min | 19 |
| Vergl. 5 | DOPO-OH | 5,0 | - | - | 95,0 | 180 °C, 12 min | k.S. |
| Vergl. 6 | DOPO-OH | 3,0 | Schwefel | 2,5 | 94,5 | 190 °C, 15 min | 3 |
| Vergl. 7 | DOPO-OH | 2,5 | Vultac TB7 | 4,0 | 93,5 | 190 °C, 15 min | 5 |
| Vergl. 8 | DOPO-OH | 5,0 | ATS | 5,0 | 90,0 | 190 °C, 15 min | 15 |
| Vergl. 9 | - | - | Schwefel | 5,0 | 95,0 | 190 °C, 15 min | 40 |
| Vergl. 10 | - | - | Vultac TB7 | 5,0 | 95,0 | 180 °C, 15 min | k.S. |
| Vergl. 11 | - | - | MelTS | 8,0 | 92,0 | 180 °C, 15 min | k.S. |
| Vergl. 12 | - | - | ATS | 4,0 | 96,0 | 180 °C, 15 min | k.S. |
| Beispiel 5 | DOPO-ONH₄ | 8,0 | - | - | 92,0 | 190 °C, 15 min | 12 |
| Beispiel 6 | DOPO-ONH₄ | 2,5 | Schwefel | 3,0 | 94,5 | 190 °C, 15 min | 4 |
| Beispiel 7 | DOPO-ONH₄ | 2,5 | Vultac TB7 | 4,0 | 93,5 | 190 °C, 15 min | 5 |
| Beispiel 8 | DOPO-ONH₄ | 8,0 | MelTS | 7,7 | 84,3 | 190 °C, 15 min | 5 |
| Beispiel 9 | DOPO-ONH₄ | 4,0 | ATS | 6,0 | 90,0 | 190 °C, 15 min | 10 |
| Beispiel 10 | DOPO-OMel | 8,0 | - | - | 92,0 | 190 °C, 15 min | 19 |
| Beispiel 11 | DOPO-OMel | 3,0 | Vultac TB7 | 4,0 | 93,0 | 190 °C, 15 min | 5 |
| Beispiel 12 | DOPO-OMel | 5,0 | MelTS | 7,0 | 88,0 | 190 °C, 15 min | 7 |
| Beispiel 13 | DOPO-OMel | 5,0 | ATS | 5,0 | 90,0 | 190 °C, 15 min | 10 |
| Beispiel 14 | DOPO-OGua | 8,0 | - | - | 92,0 | 190 °C, 15 min | 15 |
| Beispiel 15 | DOPO-OGua | 3,0 | Vultac TB7 | 4,0 | 93,0 | 190 °C, 15 min | 5 |

| | | | | | | | |
|---|---|---|---|---|---|---|---|
| k.S.: keine Selbstverlöschung | | | | | | | |

### Vergleichsbeispiele 13 bis 16 und Beispiele 16 und 17 - Herstellung und Testung flammschutzmittelhältiger Epoxidharzproben

### Beispiele 16 und 17 - Einarbeitungsmethode

Die zu einem feinkörnigen Pulver zermörserte, neue Verbindung der Erfindung, DOPO-OMel, und das Epoxidharz DOW DEN 438 (epoxidierter Novolak) wurden in einem Labordissolver (Typ DISPERMAT; VMA-Getzmann GmbH) 20 min lang im Vakuum bei 80 °C und 6000 U/min gerührt. Dann wurden 6 % Dicyandiamid (Dyhard 100S) sowie 2 % des Härtungsbeschleunigers Fenuron (Dynhard UR 300) hinzugefügt und das Rühren noch weitere 5 min fortgesetzt.

Dann wurde die Mischung in einen Aluminiumtiegel gegossen und zunächst 1 h lang bei 110 °C gehärtet und eine weitere Stunde bei 130 °C und anschließend 2 h bei 200 °C nachgehärtet. Danach wurden die ca. 3 mm dicken Platten langsam abgekühlt und dann entsprechend der Norm DIN IEC 60695-11-10 zu Probekörpern gesägt.

### Vergleichsbeispiele 13 bis 16: Präformulierung mit DOPO

Ein Epoxynovolak, D.E.N. 438 von Dow Chemicals mit einem EEW (Epoxyäquivalentgewicht) von 179 g/mol, wurde mit 0,1 Gew.-% Triethanolamin und DOPO - in der zur Einstellung des erforderlichen Phosphorgehalts im Prüfkörper jeweils notwendigen Menge - vermischt (Vergleichsbeispiel 13 enthielt kein DOPO). Das Gemisch wurde anschließend 2 h lang bei 140 °C gehalten, im Vakuum entgast und auf 90 °C abgekühlt. Die so hergestellte Präformulierung wurde bei 90 °C mit 6 Gewichtsteilen Dicyandiamid und 2 Gewichtsteilen Fenuron, bezogen auf 100 Gewichtsteile Epoxynovolak, vermischt. Die Aushärtung erfolgte in einem Aluminiumschälchen durch vorsichtiges Erhitzen auf 120 °C innerhalb von 30 min, Halten dieser Temperatur für 1 h, Erhöhung der Temperatur auf 130 °C für 1 h und anschließendes Halten einer Temperatur von 200 °C für 2 h. Daraus wurden Probenkörper mit 70 x 13 x 4 mm geformt und zur Charakterisierung der Brandeigenschaften gemäß UL94 klassifiziert.

Die für die Probenkörper erhaltenen Ergebnisse sind in umseitiger Tabelle 2 angeführt und stellen Mittelwerte von je vier Messungen dar.

**Tabelle 2 - Epoxyharzproben**

| **Beispiel** | **Flammschutzmittel** | **Gew.-%** | **Epoxy Gew.-%** | **Brenndauer, s** | **Geruch** |
|---|---|---|---|---|---|
| Vergl. 13 | - | - | 100,0 | k.S. | - |
| Vergl. 14 | DOPO | 5,0 | 95,0 | k.S. | - |
| Vergl. 15 | DOPO | 10,0 | 90,0 | 10 | - |
| Vergl. 16 | DOPO | 15,0 | 85,0 | 5 | - |
| Beispiel 16 | DOPO-OMel | 5,0 | 95,0 | 4 | - |
| Beispiel 17 | DOPO-OMel | 10,0 | 90,0 | 3 | - |

| | | | | | |
|---|---|---|---|---|---|
| k.S.: keine Selbstverlöschung | | | | | |

### Beispiel 18 - Herstellung und Testung flammschutzmittelhältiger Polyurethanharzproben

In einem Rührgefäß mit einem Dissolverrührwerk wurden 195,75 g eines standardmäßigen Propylenoxid-Ethylenoxid-Polyethertriols mit einer OH-Zahl von 48 ± 2 und einer Viskosität von 600-700 mPa.s vorgelegt und 23,49 g DOPO-OMel eindispergiert, bis eine Kornfeinheit < 30 µm vorlag. Anschließend wurden zur Suspension in dieser Reihenfolge 5,88 g destilliertes Wasser, 0,257 g 1,4-Diazabicyclo[2.2.2]octan, 0,312 g N,N-Dimethylbenzylamin, 0,99 g Polyethersiloxan (Tegostab BF 2370; Goldschmidt) und 0,585 Zinn(II)-2-ethylhexanoat bei laufendem Mischwerk zugesetzt. Zu diesem Stoffgemisch wurden nun 71,25 g Desmodur T 80 (Bayer Material Science) zugesetzt und intensiv verrührt. Danach wurde das Reaktionsgemisch zur Blockschaumbildung in einen Karton entleert. Der Massenanteil an DOPO-OMel in der Formulierung betrug 7,8 %.

Nach 24 h wurden aus dem Blockschaum (Dichte ca. 32 g/l) 6 Probenkörper gemäß DIN 75200 bzw. FMVSS 302 (16 bis 20 mm) zugeschnitten, und die Entflammbarkeit wurde nach derselben Norm in einem Norm-Brennkasten bestimmt.

| **Probe** | **1** | **2** | **3** | **4** | **5** | **6** |
|---|---|---|---|---|---|---|
| | 16 mm | 19 mm | 17 mm | 16 mm | 20 mm | 18 mm |

Das Prüfergebnis gemäß dem Bewertungsschema FMVSS 302 lautete in jedem Fall: SE, also "self extinguishing", d.h. selbstverlöschend.

### Diskussion der Ergebnisse

Aus den Ergebnissen mit Polystyrol als Kunststoffmasse geht hervor, dass alle drei neuen Salze der vorliegenden Erfindung sehr gute Flammschutzmittel sind, die klar bessere Wirkung zeigen als die Vergleichssubstanzen DOPO und DOPO-OH, das Synthese-Ausgangsprodukt. Ihre Wirksamkeit ist durch Zusatz geringer Mengen eines Synergisten sogar noch deutlich steigerbar. Das Melaminiumsalz DOPO-OMel schnitt zwar in diesem Test - auch aufgrund des vergleichsweise höheren Molekulargewichts - am wenigsten gut ab, bewies jedoch daraufhin im Test mit Epoxyharz seine Überlegenheit gegenüber DOPO. Dieser und der anschließende Test mit Polyurethanharz belegen zudem die vielseitige Einsetzbarkeit dieser Substanz.

Die Erfindungsgemäße Verbindungen der vorliegenden Erfindung sind somit als Flammschutzmittel - alleine, aber speziell auch in Kombination mit Schwefel oder schwefelhältigen Substanzen als Synergisten - bestens geeignet.

## Patentansprüche

1. Verfahren zur Herstellung eines Ammoniumsalzes der Formel I 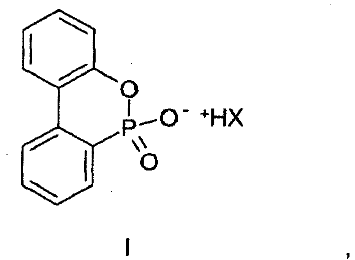 worin X aus Ammoniak, Melamin und Guanidin ausgewählt ist,
durch Umsetzen von 9,10-Dihydro-10-hydroxy-9-oxa-10-phosphaphenanthren-10-on bzw. -10-oxid (DOPO-OH) mit dem entsprechenden Amin oder einem Salz davon, **dadurch gekennzeichnet, dass** die Umsetzung in einem heterogenen Reaktionsgemisch erfolgt, indem DOPO-OH und/oder das entsprechende Amin als Feststoff(e) vorgelegt bzw. zugesetzt wird/werden.

2. Verfahren nach Anspruch 1, **dadurch gekennzeichnet, dass** DOPO-OH
a) mit Ammoniak zu 9,10-Dihydro-10-hydroxy-9-oxa-10-phosphaphenanthren-10-on-bzw. -10-oxid-ammoniumsalz (DOPO-ONH₄): 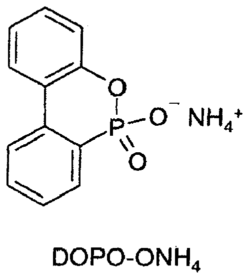 oder
b) mit Melamin zu 9,10-Dihydro-10-hydroxy-9-oxa-10-phosphaphenanthren-10-on-bzw. -10-oxid-melaminiumsalz (DOPO-OMel): 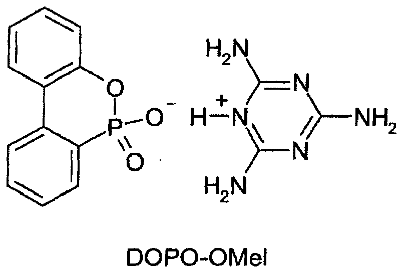 oder
c) mit Guanidiniumcarbonat zu 9,10-Dihydro-10-hydroxy-9-oxa-10-phosphaphenanthren-10-on- bzw. -10-oxid-guanidiniumsalz (DOPO-OGua): 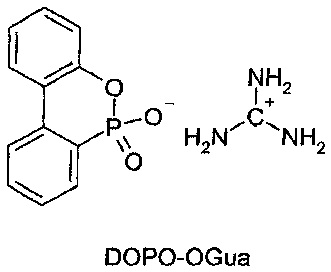 umgesetzt wird.

3. Ammoniumsalz von 9,10-Dihydro-10-hydroxy-9-oxa-10-phosphaphenanthren-10-on bzw. -10-oxid (DOPO-OH) der Formel I: 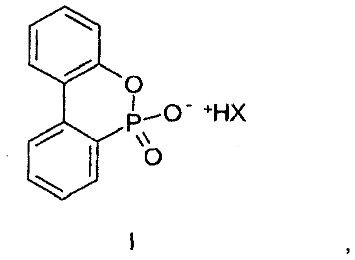 worin X aus Melamin und Guanidin ausgewählt ist, d.h.
9,10-Dihydro-10-hydroxy-9-oxa-10-phosphaphenanthren-10-on- bzw. -10-oxid-melaminiumsalz (DOPO-OMel): 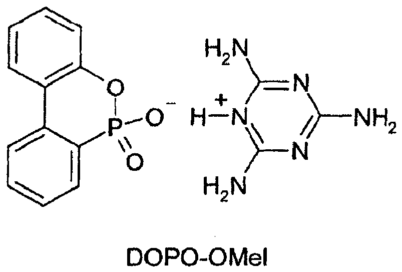 bzw.
9,10-Dihydro-10-hyd,roxy-9-oxa-10-phosphaphenanthren-10-on- bzw. -10-oxid-guanidiniumsalz (DOPO-OGua):

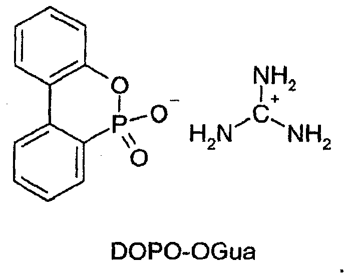

4. Verwendung eines Ammoniumsalzes nach Anspruch 3 als Flammschutzmittel.

5. Verwendung nach Anspruch 4, **dadurch gekennzeichnet, dass** das Ammoniumsalz oder ein Gemisch mehrerer davon in einem Anteil von 0,1 bis 30 Gew.-%, vorzugsweise 3 bis 10 Gew.-%, eingesetzt wird.

6. Verwendung nach Anspruch 4 oder 5, **dadurch gekennzeichnet, dass** das Ammoniumsalz oder das Gemisch mehrerer davon in Kombination mit elementarem Schwefel und/oder zumindest einer schwefelhältigen Verbindung eingesetzt wird.

7. Verwendung nach Anspruch 6, **dadurch gekennzeichnet, dass** die zumindest eine schwefelhältige Verbindung zumindest eine S-S-Bindung aufweist.

8. Verwendung nach Anspruch 6 oder 7, **dadurch gekennzeichnet, dass** die zumindest eine schwefelhaltige Verbindung aus Ammoniumthiosulfat, Melaminthiosulfat und Alkylphenolpolysulfiden, wie z.B. polymerem p-t-Butylphenoldisulfid, ausgewählt ist.

9. Verwendung nach einem der Ansprüche 4 bis 8, **dadurch gekennzeichnet, dass** das Ammoniumsalz oder das Gemisch mehrerer davon in einer Flammschutzzusammensetzung eingesetzt wird.

10. Flammschutzzusammensetzung, die ein oder mehrere Ammoniumsalze nach Anspruch 3 als Flammschutzmittel umfasst.

11. Flammschutzzusammensetzung nach Anspruch 10, **dadurch gekennzeichnet, dass** zusätzlich elementarer Schwefel und/oder zumindest eine schwefelhältige Verbindung enthalten ist/sind.

12. Flammschutzzusammensetzung nach Anspruch 11, **dadurch gekennzeichnet, dass** die zumindest eine schwefelhältige Verbindung aus Ammoniumthiosulfat, Melaminthiosulfat und Alkylphenolpolysulfiden, wie z.B, polymerem p-t-Butylphenoldisulfid, ausgewählt ist.

13. Flammschutzzusammensetzung nach einem der Ansprüche 10 bis 12, **dadurch gekennzeichnet, dass** zusätzlich ein oder mehrere Additive, ausgewählt aus organischen Peroxiden, Metallen und Metallverbindungen, Stickstoffverbindungen, Nanopartikeln und Gemischen davon, enthalten sind.

## Claims

1. Method for the manufacture of an ammonium salt with formula I 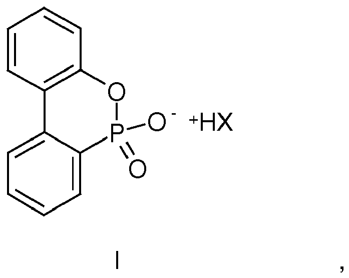 wherein X is selected from ammonia, melamine and guanidine,
by reacting 9,10-dihydro-10-hydroxy-9-oxa-10-phosphaphenanthrene-10-one or -10-oxide (DOPO-OH) with the correspond amine or a salt thereof,
**characterized in that** the reaction is carried out in a heterogeneous reaction mixture in which DOPO-OH and/or the corresponding amine is/are provided or added in the solid form.

2. Method according to claim 1, **characterized in that** DOPO-OH is reacted with
a) ammonia to form 9,10-dihydro-10-hydroxy-9-oxa-10-phosphaphenanthrene-10-one or -10-oxide ammonia salt (DOPO-ONH₄): 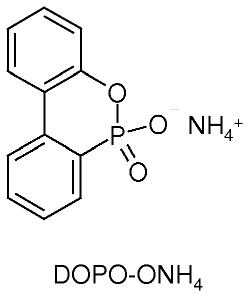 or
b) with melamine to form 9,10-dihydro-10-hydroxy-9-oxa-10-phosphaphenanthrene-10-one or -10-oxide melaminium salt (DOPO-OMel): 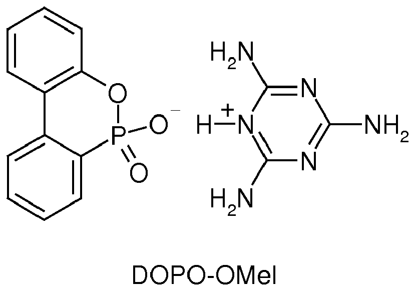 or
c) with guanidinium carbonate to form 9,10-dihydro-10-hydroxy-9-oxa-10-phosphaphenanthrene-10-one or -10-oxide guanidinium salt (DOPO-OGua): 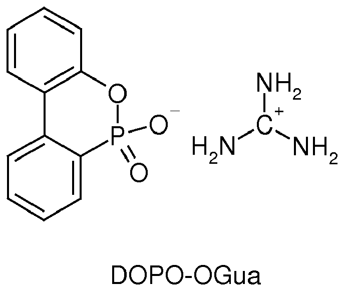 umgesetzt wird.

3. Ammonia salt of 9,10-dihydro-10-hydroxy-9-oxa-10-phosphaphenanthrene-10-one or -10-oxide (DOPO-OH) with formula I: 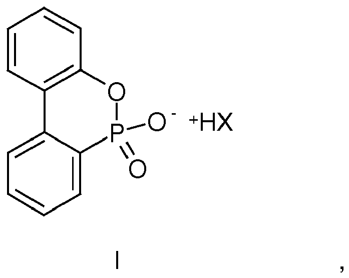 wherein X is selected from melamine and guanidine, i.e.
9,10-dihydro-10-hydroxy-9-oxa-10-phosphaphenanthrene-10-one or -10-oxide melaminium salt (DOPO-OMel): 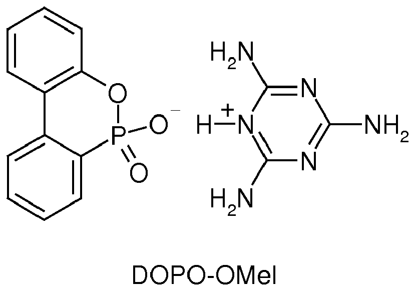 or
9,10-dihydro-10-hydroxy-9-oxa-10-phosphaphenanthrene-10-one or -10-oxide guanidinium salt (DOPO-OGua):

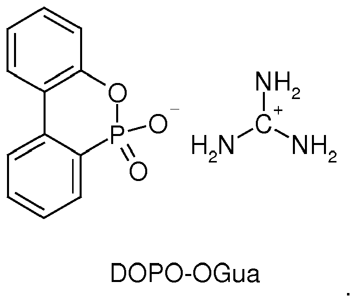

4. Use of an ammonium salt as claimed in claim 3 as a flame retardant.

5. Use as claimed in claim 4, **characterized in that** the ammonium salt or a mixture of a plurality thereof is used in a proportion of 0.1% to 30% by weight, preferably 3% to 10% by weight.

6. Use as claimed in claim 4 or claim 5, **characterized in that** the ammonium salt or the mixture of a plurality thereof is used in combination with elemental sulphur and/or at least one sulphur-containing compound.

7. Use as claimed in claim 6, **characterized in that** the at least one sulphur-containing compound comprises at least one S-S bond.

8. Use as claimed in claim 6 or claim 7, **characterized in that** the at least one sulphur-containing compound is selected from ammonium thiosulphate, melamine thiosulphate and alkylphenol polysulphides such as polymeric p-t-butylphenol disulphide, for example.

9. Use as claimed in one of claims 4 to 8, **characterized in that** the ammonium salt or the mixture of a plurality thereof is used in a flame retardant composition.

10. Flame retardant composition which comprises one or more ammonium salts as claimed in claim 3 as flame retardants.

11. Flame retardant composition as claimed in claim 10, **characterized in that** it additionally contains elemental sulphur and/or at least one sulphur-containing compound.

12. Flame retardant composition as claimed in claim 11, **characterized in that** the at least one sulphur-containing compound is selected from ammonium thiosulphate, melamine thiosulphate and alkylphenol polysulphides such as polymeric p-t-butylphenol disulphide, for example.

13. Flame retardant composition as claimed in one of claims 10 to 12, **characterized in that** it additionally contains one or more additives selected from organic peroxides, metals and metallic compounds, nitrogen compound, nanoparticles and mixtures thereof.

## Revendications

1. Procédé de préparation d'un sel d'ammonium répondant à la formule I 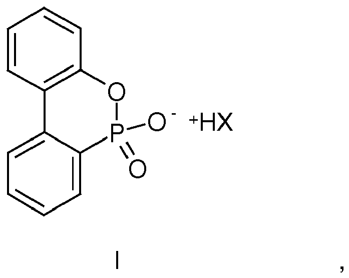 dans laquelle X est choisi parmi l'ammoniac, la mélamine et la guanidine,
en faisant réagir de la 9,10-dihydro-10-hydroxy-9-oxa-10-phosphaphénanthrène-10-one ou du -10-oxyde (DOPO-OH) avec l'amine correspondante ou un sel de cette dernière,
**caractérisé en ce que** la réaction est mise en oeuvre dans un mélange réactionnel hétérogène, en mettant en place ou en ajoutant le DOPO-OH et/ou l'amine correspondante sous forme de solide(s).

2. Procédé selon la revendication 1, **caractérisé en ce que** l'on fait réagir le DOPO-OH
a) avec de l'ammoniac pour obtenir le sel d'ammonium de la 9,10-dihydro-10-hydroxy-9-oxa-10-phosphaphénanthrène-10-one ou du -10-oxyde (DOPO-ONH₄) : 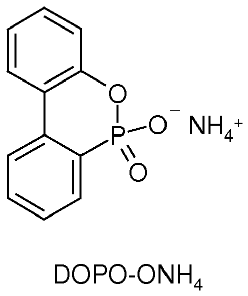 ou
b) avec de la mélamine pour obtenir le sel de mélaminium de la 9,10-dihydro-10-hydroxy-9-oxa-10-phosphaphénanthrène-10-one ou du -10-oxyde (DOPO-OMel) : 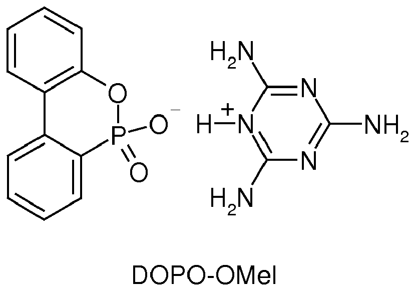 ou
c) avec du carbonate de guanidinium pour obtenir le sel de guanidinium de la 9,10-dihydro-10-hydroxy-9-oxa-10-phosphaphénanthrène-10-one ou du -10-oxyde (DOPO-OGua) :

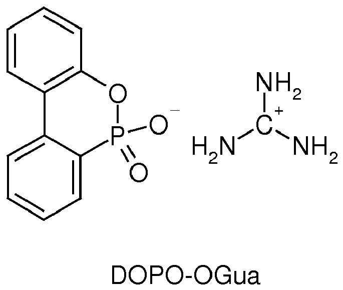

3. Sel d'ammonium de la 9,10-dihydro-10-hydroxy-9-oxa-10-phosphaphénanthrène-10-one ou du 10-oxyde (DOPO-OH) répondant à la formule I: 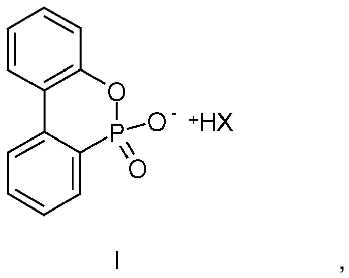 dans laquelle X est choisi parmi la mélamine et la guanidine, à savoir
le sel de mélaminium de la 9,10-dihydro-10-hydroxy-9-oxa-10-phosphaphénanthrène-10-one ou du -10-oxyde (DOPO-OMel) : 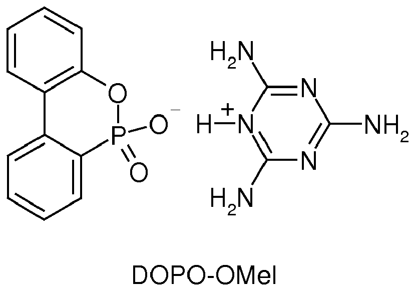 et/ou
le sel de guanidinium de la 9,10-dihydro-10-hydroxy-9-oxa-10-phosphaphénanthrène-10-one ou du -10-oxyde (DOPO-OGua) :

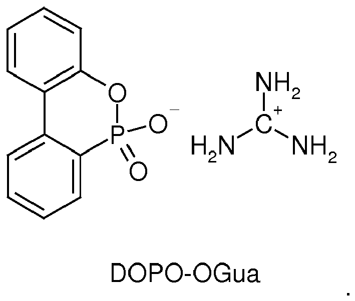

4. Utilisation d'un sel d'ammonium selon la revendication 3 en tant qu'agent ignifuge.

5. Utilisation selon la revendication 4, **caractérisée en ce que** ledit sel d'ammonium ou un mélange de plusieurs de ce dernier est mis en oeuvre dans une proportion comprise entre 0,1 et 30 % en poids, de préférence entre 3 et 10 % en poids.

6. Utilisation selon les revendications 4 ou 5, **caractérisée en ce que** le sel d'ammonium ou le mélange de plusieurs de ce dernier est mis en oeuvre en association avec du soufre élémentaire et/ou au moins un composé soufré.

7. Utilisation selon la revendication 6, **caractérisée en ce que** l'au moins un composé soufré comporte au moins une liaison S-S.

8. Utilisation selon les revendications 6 ou 7, **caractérisée en ce que** l'au moins un composé soufré est choisi parmi le thiosulfate d'ammonium, le thiosulfate de mélamine et des polysulfures d'alkylphénol comme, par exemple, le disulfure de p-t-butylphénol sous forme polymère.

9. Utilisation selon l'une des revendications 4 à 8, **caractérisée en ce que** ledit sel d'ammonium ou un mélange de plusieurs de ce dernier est mis en oeuvre dans une composition ignifuge.

10. Composition ignifuge, comprenant un ou plusieurs sels d'ammonium selon la revendication 3 en tant qu'agent(s) ignifuge(s).

11. Composition ignifuge selon la revendication 10, **caractérisée en ce que** qu'elle contient en outre du soufre élémentaire et/ou au moins un composé soufré.

12. Composition ignifuge selon la revendication 11, **caractérisée en ce que** l'au moins un composé soufré est choisi parmi le thiosulfate d'ammonium, le thiosulfate de mélamine et des polysulfures d'alkylphénol comme, par exemple, le disulfure de p-t-butylphénol sous forme polymère.

13. Composition ignifuge selon l'une des revendications 10 à 12, **caractérisée en ce qu'**elle contient, en outre, un ou plusieurs additifs choisis parmi les peroxydes organiques, des métaux et composés de métaux, les composés azotés, les nanoparticules et leurs mélanges.
